# EUROPEAN PATENT APPLICATION

(11) **EP 2 690 475 A1**
(43) Date of publication of application: **29.01.2014**
(21) Application number: 12760393.4
(22) Date of filing: 15.03.2012
(51) Int. Cl.: G02B 7/02, G02B 7/08, G03B 9/02

(54) **LENS DEVICE AND CONTROL SYSTEM THEREFOR**

(30) Priority: 22.03.2011 JP 2011062963
(71) Applicant: FUJIFILM Corporation, Tokyo 106-0031 (JP)
(72) Inventor: SASAKI Tadashi, Saitama (JP)
(74) Representative: Klunker . Schmitt-Nilson . Hirsch
(86) International application number: PCT/JP2012/056711
(87) International publication number: WO 2012/128179

(57) **Abstract**

A CPU 114 of a lens device 100 having an EC device 104 turns on an LED 108 after controlling the transmittance of the EC device 104 to a maximum value. The CPU 114 acquires an output signal level of a PH 109 which receives part, passing through the EC device 104, of light emitted from the LED 108 and sets the acquired output signal level as a reference transmittance. In response to an instruction that specifies a multiplication factor by which to multiply the reference transmittance, the CPU 114 controls the voltage supplied to the EC device 104 so that the output value of the PD 109 becomes equal to the reference transmittance multiplied by the multiplication factor.

## Description

### TECHNICAL FIELD

The present invention relates to a lens device and its control method.

### BACKGROUND ART

In light quantity adjusting devices used in optical systems of video cameras etc., the quantity of light shining on an imaging surface is adjusted by providing a device for inserting an ND filter into the optical path separately from an iris device.

However, in this adjustment method, it is necessary to provide the device for inserting the ND filter into the optical path separately from the iris device. As a result, the device for adjusting the quantity of light shining on the imaging surface is made large and complex as a whole. Furthermore, a continuous image cannot be obtained in movie cameras because light to shine on the imaging surface is interrupted at the time of insertion or removal of the ND filter.

In view of the above, many proposals have been made that, as disclosed in the following Patent documents 1-3, a light-transmittance-adjustable optical device such as a liquid crystal device or an electrochromic (EC) device is disposed in the optical path and the quantity of light shining on the imaging surface is adjusted by adjusting the light transmittance of this optical device.

### Prior Art Documents

### Patent Documents

Patent document 1: JP-A-2000-227618
Patent document 2: JP-A-2004-93786
Patent document 3: JP-A-10-32832

### SUMMARY OF THE INVENTION

### Problems to Be Solved by the Invention

In Patent documents 1-3, the light transmittance of an optical device is detected by a photointerrupter or the like and the voltage applied to the optical device is controlled so that the detected transmittance becomes equal to a desired transmittance.

In many cases, inexpensive light-emitting elements and photodetecting elements are used in photointerrupters. Such inexpensive photointerrupters suffer high degrees of deterioration with age. If a photointerrupter has deteriorated with age, a detected transmittance deviates from an actual one, rendering it difficult to control the transmittance of the optical device with high accuracy.

In particular, in business TV cameras etc. which are used at high frequencies, it is strongly required to reduce the degree of such lowering of the accuracy of light transmittance control due to deterioration with age.

The present invention has been made in the above circumstances, and an object of the present invention is therefore to provide a lens device and its control method which can control, with high accuracy, all the time, the light transmittance of an optical device whose light transmittance can be controlled electrically.

### Means for Solving the Problems

A lens device according to the invention is a lens device having an optical device whose light transmittance can be controlled electrically, comprising an optical device drive unit for controlling the light transmittance of the optical device by controlling a voltage applied to the optical device; a light-emitting element for applying light to the optical device; a photodetecting element for receiving part, passing through the optical device, of the light applied from the light-emitting element; and a control unit for performing calibration processing of setting, as a reference transmittance which is a reference value for a light transmittance that can be specified externally, an output value of the photodetecting element that is obtained when the photodetecting element receives part, passing through the optical device, of light that is applied to the optical device from the light-emitting element in a state that at least part of the optical device is shielded from light and the light transmittance of the optical device is maximized by the optical device drive unit, wherein in response to an instruction that specifies a multiplication factor by which to multiply the reference transmittance, the optical device drive unit controls the voltage supplied to the optical device so that the output value of the photodetecting element becomes equal to a value obtained by multiplying the reference transmittance by the multiplication factor.

A control method of a lens device according to the invention is a control method of a lens device having an optical device whose light transmittance can be controlled electrically, comprising a calibration step of setting, as a reference transmittance which is a reference value for a light transmittance that can be specified externally, an output value of a photodetecting element that is obtained when the photodetecting element receives part, passing through the optical device, of light that is applied to the optical device from a light-emitting element in a state that at least part of the optical device is shielded from light and the optical device is driven so that its light transmittance is maximized; and a step, responsive to an instruction that specifies a multiplication factor by which to multiply the reference transmittance, of controlling a voltage supplied to the optical device so that the output value of the photodetecting element becomes equal to a value obtained by multiplying the reference transmittance by the multiplication factor.

### Advantages of the Invention

The invention makes it possible to provide a lens device and its control method which can control, with high accuracy, the transmittance of an optical device whose light transmittance can be controlled electrically.

### BRIEF DESCRIPTION OF THE DRAWINGS

[Fig. 1] Fig. 1 is a drawing for description of an embodiment of the present invention which shows a general configuration of a camera system.
[Fig. 2] Fig. 2 is a flowchart showing how the camera system shown in Fig. 1 operates.
[Fig. 3] Fig. 3 shows a modification of an EC device of a lens device of the camera system shown in Fig. 1.
[Fig. 4] Fig. 4 shows a modification of the camera system shown in Fig. 1.
[Fig. 5] Fig. 5 is a flowchart showing how the camera system shown in Fig. 4 operates.

### MODES FOR CARRYING OUT THE INVENTION

An embodiment of the present invention will be hereinafter described with reference to the drawings.

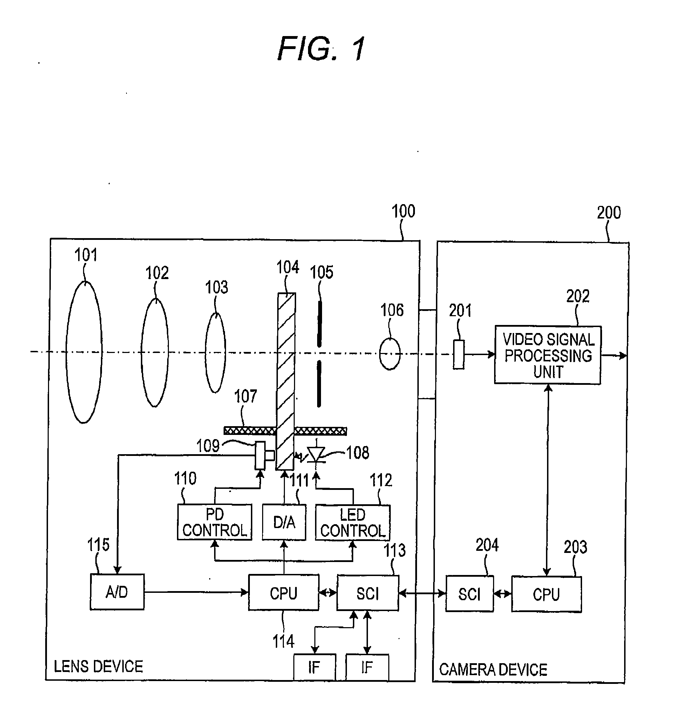

Fig. 1 is a drawing for description of the embodiment of the invention which shows a general configuration of a camera system. This camera system is suitable for use as a business TV camera system.

The camera system shown in Fig. 1 is equipped with a lens device 100 and a camera device 200 to which the lens device 100 is attached.

The camera device 200 is equipped with an imaging unit 201 which is disposed on the optical axis L of the lens device 100, a video signal processing unit 202 for generating image data by processing an image signal obtained through imaging by the imaging unit 201, a CPU 203 for controlling the entire camera device 200 in a unified manner, and an SCI (serial communication interface) 204 for communicating with the lens device 100.

The shooting optical system of the lens device 100 is equipped with a focus lens group 101, zoom lens groups 102 and 103, an electrochromic device (EC device) 104 which is an optical device whose light transmittance can be controlled electrically, an iris 105, and a master lens group 106, which are arranged in this order from the subject side.

The EC device 104 is shaped like a plate that is disposed perpendicularly to the optical axis L of the shooting optical system. A bottom portion of the EC device 104 is shielded from light by a plate-like light shield member 107 which is parallel with the optical axis L.

A light-emitting diode (LED) 108 as a light-emitting element and a photodiode (PD) 109 as a photodetecting element are disposed in a space (located on the opposite side of the light shield member 107 to the optical axis L (below the light shield member 107)) that is shielded from light by the light shield member 107.

The LED 108 and the PD 109 are opposed to each other with that portion of the EC device 104'which is shielded from light by the light shield member 107 interposed in between. Light emitted from the LED 108 passes through the EC device 104 (its portion shielded from light by the light shield member 107) and is received by the PD 109.

The lens device 100 is also equipped with a PD control unit 110 for controlling the PD 109, an LED control unit 112 for controlling the LED 108, an EC drive unit (D/A) 111 for driving the EC device 104, an AD conversion unit 115 for performing analog-to-digital conversion on an output signal of the PD 109, and a system control unit (CPU) 114 for controlling them in a unified manner.

The EC drive unit 111 controls the light transmittance of the EC device 104 by controlling the voltage that is applied between a pair of electrodes of the EC device 104.

An SCI 113 is connected to the CPU 114. An interface (IF) to which an operating unit for operating the lens device 100 is connected and the SCI 204 incorporated in the camera device 200 are connected to the SCI 113.

The CPU 114 performs calibration processing immediately after power-on of the lens device 100 to control the light transmittance of the EC device 104 accurately without being affected by a use environment or deterioration with age of the lens device 100.

The calibration processing includes processing for maximizing the light transmittance of the EC device 104 by controlling the EC drive unit 111, processing of controlling the LED control unit 112 to cause the LED 108 to emit light in a state that the EC device 104 has been given a maximum transmittance by the above processing, processing of acquiring an output signal of the PD 109 that has received light that has been emitted from the LED 108 as a result of the above emission processing and has passed through the EC device 104, and processing of setting the acquired output signal as a reference transmittance which is a reference value for a light transmittance that can be specified externally for the EC device 104.

If a user makes an instruction for setting of a light transmittance for the EC device 104 (more specifically, an instruction that specifies a multiplication factor by which to multiply the reference transmittance) after the setting of the reference transmittance, this setting instruction value (multiplication factor) is sent from the lens operating unit or the camera device 200 to the CPU 114 via the SCI 113. When receiving this setting instruction value (multiplication factor), the CPU 114 determines a voltage to be supplied to the EC device 104 from the EC drive unit 111 so that the output signal level of the PD 109 becomes equal to the product of the above-mentioned reference transmittance and the multiplication factor.

The above setting instruction value is a multiplication factor (1/N) by which to multiply the reference transmittance. The maximum transmittance of the EC device 104 may not be equal to a design value because of a use environment of the lens device 100, process variations, or the like, and it is difficult to know its correct value. On the other hand, the reference transmittance that is set by the CPU 114 corresponds to an actual measurement value of the maximum transmittance of the EC device 104. Therefore, the CPU 114 can control the light transmittance of the EC device 104 to 1/N times its maximum transmittance by determining a voltage to be supplied to the EC device 104 so that the output level of the PD 109 comes to indicate 1/N times the above reference transmittance which corresponds to the maximum transmittance of the EC device 104.

A conventional, common method for controlling the transmittance of the EC device 104 is to estimate a current light transmittance of the EC device 104 from an output signal level of the PD 109 and control the voltage to be applied to the EC device 104 so that the estimated light transmittance becomes equal to a target light transmittance. This method is effective in the case where each of the LED 108 and the PD has suffered almost no deterioration with age. However, where each of the LED 108 and the PD has suffered a high degree of deterioration with age, a light transmittance that is estimated from an output signal level of the PD 109 deviates from an actual one to a large extent and hence the light transmittance of the EC device 104 cannot be controlled accurately to a target value.

In contrast, in the lens device 100, calibration processing is performed immediately after power-on, whereby a value corresponding to an actual measurement value of the maximum transmittance of the EC device 104 at the time of the power-on which reflects a use environment of the lens device 100, process variations of the EC device 104, and deterioration with age of each of the LED 108 and the PD 109 is set as a reference transmittance. If a setting instruction which specifies a multiplication factor by which to multiply the reference transmittance is made thereafter, the light transmittance of the EC device 104 is controlled on the basis of the reference transmittance. Therefore, the light transmittance of the EC device 104 can be controlled correctly without being affected by a use environment or deterioration with age of the lens device 100.

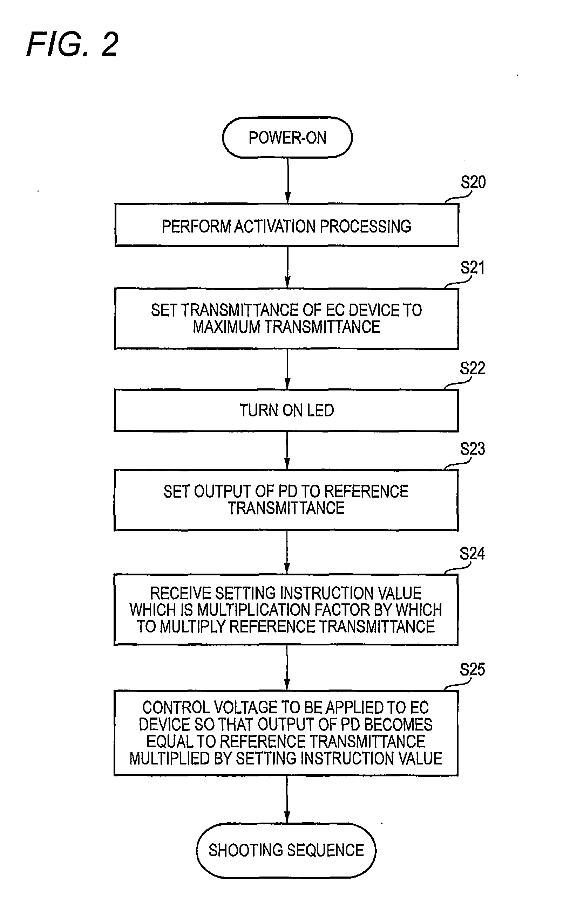

How the camera system shown in Fig. 1 operates will be described below. Fig. 2 is a flowchart showing how the camera system shown in Fig. 1 operates.

Upon power-on of the lens device 100, the CPU 114 of the lens device 100 performs processing that is necessary for activation (step S20).

Then, the CPU 114 controls the EC drive unit 111 to set the light transmittance of the EC device 104 to a maximum value (step S21). The term "maximum value" as used herein includes not only the maximum value of a settable transmittance range of the EC device 104 but also a value that is slightly smaller than it. That is, at step S21, the reference transmittance may be set to a substantially maximum transmittance in a transmittance control range of the EC device 104.

Then, the CPU 114 controls the LED control unit 112 to turn on the LED 108 (step S22). When the LED 108 is turned on, light emitted from the LED 108 passes through the EC device 104 and is received by the PD 109. A signal corresponding to the received light is output from the PD 109.

Then, the CPU 114 acquires the output signal of the PD 109 from the AD conversion unit 115, and sets the level of the output signal as a reference transmittance (step S23).

After the execution of step S23, if receiving a setting instruction value (a multiplication factor by which to multiply the reference transmittance) for the light transmittance of the EC device 104 from the lens operating unit or the camera device 200 (step S24), the CPU 114 controls the EC drive unit 111 to control the light transmittance of the EC device 104 so that the output signal level of the PD 109 becomes equal to the product (target value) of the reference transmittance that was set at step S23 and the setting instruction value (step S25). After the execution of step S25, the CPU 114 turns off the LED 108 and makes a transition to an imaging sequence.

As described above, in the lens device 100, a reference transmittance is set every time it is powered on. Therefore, this reference transmittance can be made a value that reflects a use environment of the lens device 100, a characteristic of the EC device 104, a characteristic of each of the LED 108 and the PD 109, and other factors at the time of the power-on. This makes it possible to control the light transmittance of the EC device 104 with high accuracy irrespective of a use environment and deterioration with age of the lens device 100.

Furthermore, in the lens device 100, the light transmittance of the EC device 104 can be controlled with high accuracy without being affected by deterioration with age. Therefore, inexpensive ones can be employed as the light-emitting element (LED 108) and the photodetecting element (PD 109), whereby the price of the lens device 100 can be reduced.

It is preferable to restrict the light emission amount of the light-emitting element (LED 108) of the lens device 100 so that the output signal level of the PD 109 does not reach a saturation level when it is illuminated with light that has been emitted from the LED 108 and passed through the EC device 104 being in a state that its light transmittance is set to a maximum transmittance. Example methods for controlling the light emission amount are to restrict a current supplied to the LED 108 by the CPU 114 and to disposing a mechanical slit between the LED 108 and the EC device 104.

The optical device that is provided in the lens device 100 as a one whose light transmittance can be changed by supplying a voltage to it is not limited to an electrochromic device and may be any device. For example, it may be a device whose light transmittance can be changed utilizing electrophoresis.

In the calibration processing, the CPU 114 of the lens device 100 may acquire an output signal level of the PD 109 in a state that the transmittance of the EC device 104 is set to a minimum transmittance and set this output signal level as a reference transmittance. In this case, a setting instruction value that can be input externally becomes a value that is larger than or equal to 1. For example, if the instruction value is "2," the voltage supplied to the EC device 104 is controlled so that the output signal level of the PD 109 becomes equal to a value that is two times the reference transmittance.

The description that was made above with reference to Fig. 2 is such that the calibration processing consisting of steps S21-S23 is performed is performed immediately after power-on of the lens device 100. Alternatively, calibration processing may be performed plural times after power-on.

For example, after performing calibration processing once immediately after power-on, the CPU 114 performs calibration processing again if the time from reception of an instruction to set a light transmittance for the EC device 104 (to reception of the next instruction) has exceeded a threshold value. If as in this case no instruction to set a light transmittance has been made for a long time after the preceding instruction was made, the use environment of the lens device 100 may have changed during that course.

If the use environment has changed, the characteristics of the EC device 104, the LED 108, and the PD 109 may have changed. If the characteristics of the EC device 104, the LED 108, and the PD 109 have changed, the reliability of a reference transmittance that was set immediately after power-on of the lens device 100 becomes low. Performing calibration processing again in such a case makes it possible to update the reference transmittance to a value that is suitable for the current use environment of the lens device 100 and to thereby prevent reduction of the accuracy of the light transmittance control.

Calibration processing may be performed again when an instruction to set the multiplication factor at "1," that is, an instruction to set the light transmittance of the EC device 104 to a maximum value, is made after calibration processing was performed once immediately after power-on. Also performing calibration processing when an instruction to set the light transmittance of the EC device 104 to a maximum value is made can make the processing efficient.

Where the calibration processing is such that a reference transmittance is set with the light transmittance of the EC device 104 set to a minimum value, the CPU 114 may perform calibration processing again when an instruction to set the multiplication factor at "1," that is, an instruction to set the light transmittance of the EC device 104 to a minimum value, is made after calibration processing was performed once immediately after power-on.

After performing calibration processing once immediately after power-on, the CPU 114 may perform calibration processing again every time an instruction is received from a user. This makes it possible to perform calibration whenever a user wants to do so, which means increase in usability.

In each of the above-described modes, it is preferable that the CPU 114 prohibits calibration processing while an image taken by the camera device 200 is being recorded. In other words, it is preferable to perform calibration processing in a period when no image taken is being recorded (recording suspension period). This is because if calibration processing is performed during recording of an image taken, the transmittance of the EC device 104 is controlled to a maximum value, whereby the image being taken is changed in brightness, resulting in degradation in image quality.

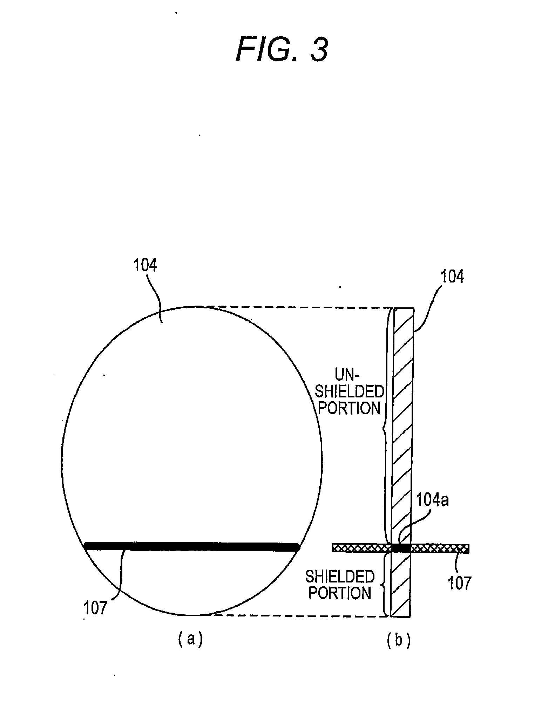

To increase the reliability of a reference transmittance that is set by the calibration processing, it is preferable to more thoroughly prevent external light from shining on the LED 108, the PD 109, or that portion of the EC device 104 which is interposed between them. For example, it is preferable that as shown in Fig. 3 an opaque region 104a which does not transmit light be formed as a boundary portion between the portion that is shielded from light by the light shield member 107 (the portion located above the light shield member 107) and the portion that is not shielded from light by the light shield member 107 (the portion located below the light shield member 107).

The EC device 104 shown in Fig. 3 can be formed by separately producing an unshielded portion and a shielded portion which function as EC devices singly and bonding them together with a black adhesive, for example. In this case, the portion made of the black adhesive serves as the opaque region 104a.

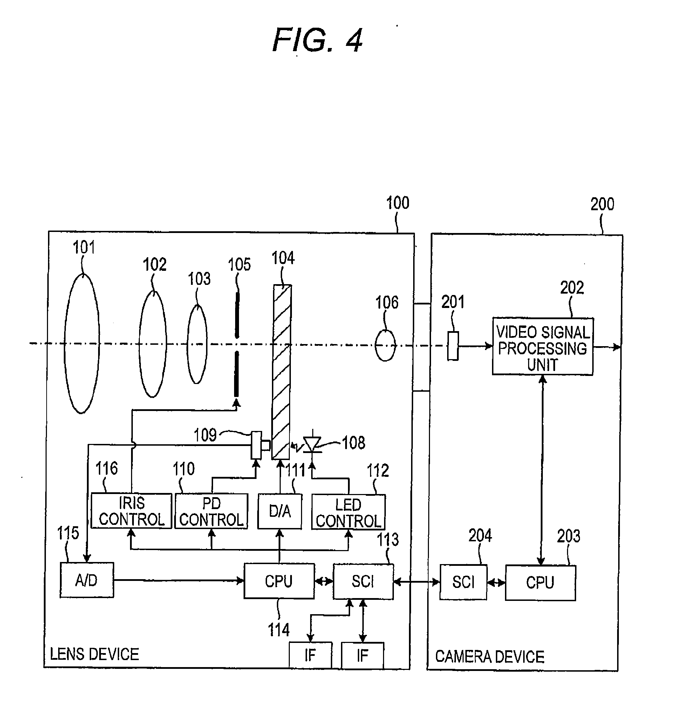

Fig. 4 shows a modification of the camera system shown in Fig. 1. The camera system shown in Fig. 4 is the same in configuration as that shown in Fig. 1 except that the positions of the iris 105 and the EC device 104 of the lens device 100 are reversed, the light shield member 107 is not provided, and an iris control unit 16 is added.

The iris control unit 116 performs an open/close control on the iris 105 under the control of the CPU 114.

The CPU 114 controls the iris control unit 116 to close the iris 105 completely before performing the processing for obtaining an output value of the PD 109 corresponding to a maximum (or minimum) transmittance of the EC device 104 which is part of the calibration processing. That is, the EC device 104 is illuminated with light that is emitted from the LED 108 in a state that the iris 105 is closed completely and the EC device 104, the LED 108, and the PD 109 are thereby shielded from light completely. An output signal level of the PD 108 that is obtained when it receives part, passing through the EC device 104, of the above light is set as a reference transmittance.

Since as described above the processing of setting a reference transmittance is performed by obtaining an output value of the PD 109 corresponding to a maximum (or minimum) transmittance of the EC device 104 in a state that the EC device 104, the LED 108, and the PD 109 are shielded from light completely, influence of external light can be eliminated completely and hence the reliability of the reference transmittance can be increased.

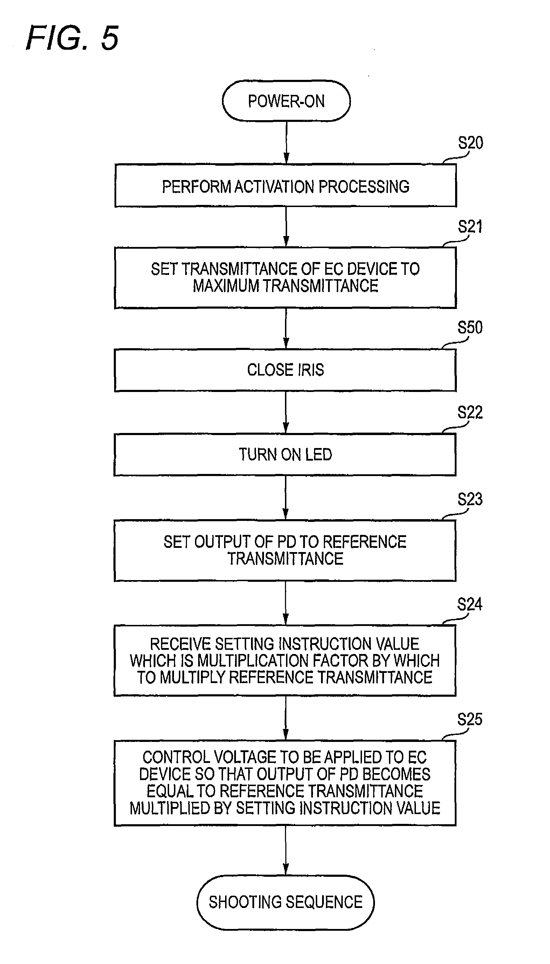

Fig. 5 is a flowchart showing how the camera system shown in Fig. 4 operates. Steps shown in Fig. 5 having the same ones in Fig. 2 are given the same symbols as the latter and their descriptions will be omitted.

After the light transmittance of the EC device 104 is maximized at step S21, the CPU 114 controls the iris control unit 116 to close the iris 105 completely (step S 50). Subsequently, the CPU 114 executes steps S22 and the following steps which are the same as shown in Fig. 2.

As described above, in the lens device 100 shown in Fig. 5, since a reference transmittance is set in a state that the EC device 104, the LED 108, and the PD 109 are shielded from light completely, influence of external light can be eliminated completely, whereby the reliability of the reference transmittance can be increased and the light transmittance of the EC device 104 can be controlled with high accuracy.

As described above, this specification discloses the following items:

The disclosed lens device is a lens device having an optical device whose light transmittance can be controlled electrically, comprising an optical device drive unit for controlling the light transmittance of the optical device by controlling a voltage applied to the optical device; a light-emitting element for applying light to the optical device; a photodetecting element for receiving part, passing through the optical device, of the light applied from the light-emitting element; and a control unit for performing calibration processing of setting, as a reference transmittance which is a reference value for a light transmittance that can be specified externally, an output value of the photodetecting element that is obtained when the photodetecting element receives part, passing through the optical device, of light that is applied to the optical device from the light-emitting element in a state that at least part of the optical device is shielded from light and the light transmittance of the optical device is maximized by the optical device drive unit, wherein in response to an instruction that specifies a multiplication factor by which to multiply the reference transmittance, the optical device drive unit controls the voltage supplied to the optical device so that the output value of the photodetecting element becomes equal to a value obtained by multiplying the reference transmittance by the multiplication factor.

The disclosed lens device is such that the control unit performs the calibration processing at least once after power-on of the lens device.

The disclosed lens device is such that the control unit performs the calibration processing immediately after the power-on of the lens device.

The disclosed lens device is such that the control unit prohibits the calibration processing while an image taken by a camera device to which the lens device is attached is being recorded.

The disclosed lens device is such that the control unit performs the calibration processing again if a time from reception of the instruction that specifies the multiplication factor by which to multiply the reference transmittance to reception of a next such instruction has exceeded a threshold value.

The disclosed lens device is such that the control unit performs the calibration processing again if the instruction is an instruction specifying that the multiplication factor is equal to 1.

The disclosed lens device further comprises a light shield member for shielding part of the optical device from light, and is such that the light-emitting element and the photodetecting element are disposed in a space that is shielded from light by the light shield member.

The disclosed lens device is such that the optical device is a plate-like device disposed perpendicularly to an optical axis of the lens device, and is formed with an opaque region which does not transmit light as a boundary portion between a portion that is shielded from light by the light shield member and a portion that is not shielded from light by the light shield member.

The disclosed lens device further comprises an iris which is disposed on the subject side of the optical device, and is such that the light-emitting element and the photodetecting element are disposed closer to the optical device than the iris; and that in the calibration processing the control unit sets a reference transmittance by causing the light-emitting element to apply light to the optical device in a state that the iris is closed completely and the light transmittance of the optical device is maximized.

The disclosed lens device is such that in the calibration processing the control unit sets a reference transmittance by causing the light-emitting element to apply light to the optical device in a state that at least part of the optical device is shielded from light and the light transmittance of the optical device is maximized; and that a light emission amount of the light-emitting element is restricted so that an output of the photodetecting device that is produced when the photodetecting device receives light that passes through the optical device being illuminated with light by the light-emitting element in a state that the light transmittance of the optical device is maximized is not saturated.

The disclosed control method of a lens device is a control method of a lens device having an optical device whose light transmittance can be controlled electrically, comprising a calibration step of setting, as a reference transmittance which is a reference value for a light transmittance that can be specified externally, an output value of a photodetecting element that is obtained when the photodetecting element receives part, passing through the optical device, of light that is applied to the optical device from a light-emitting element in a state that at least part of the optical device is shielded from light and the optical device is driven so that its light transmittance is maximized; and a step, responsive to an instruction that specifies a multiplication factor by which to multiply the reference transmittance, of controlling a voltage supplied to the optical device so that the output value of the photodetecting element becomes equal to a value obtained by multiplying the reference transmittance by the multiplication factor.

The disclosed control method of a lens device is such that the calibration step is executed at least once after power-on of the lens device.

The disclosed control method of a lens device is such that the calibration step is executed immediately after the power-on of the lens device.

The disclosed control method of a lens device is such that execution of the calibration step is prohibited while an image taken by a camera device to which the lens device is attached is being recorded.

The disclosed control method of a lens device is such that the calibration step is executed again if a time from reception of the instruction that specifies the multiplication factor by which to multiply the reference transmittance to reception of a next such instruction has exceeded a threshold value.

The disclosed control method of a lens device is such that the calibration step is executed again if the instruction is an instruction specifying that the multiplication factor is equal to 1.

The disclosed lens device is such that the calibration step sets a reference transmittance by causing the light-emitting element to apply light to the optical device in a state that the iris is closed completely and the light transmittance of the optical device is maximized.

The disclosed lens is such that the calibration step sets a reference transmittance by causing the light-emitting element to apply light to the optical device in a state that at least part of the optical device is shielded from light and the light transmittance of the optical device is maximized; and that a light emission amount of the light-emitting element is restricted so that an output of the photodetecting device that is produced when the photodetecting device receives light that passes through the optical device being illuminated with light by the light-emitting element in a state that the light transmittance of the optical device is maximized is not saturated.

### Industrial Applicability

The invention makes it possible to provide a lens device and its control method which can control, with high accuracy, the transmittance of an optical device whose light transmittance can be controlled electrically.

Although the invention has been described in detail by referring to the particular embodiment, it is apparent to those skilled in the art that various changes and modifications are possible without departing from the spirit and scope of the invention. The present application is based on Japanese Patent Application No. 2011-62963 filed on March 22, 2011, the disclosure of which is incorporated herein by reference.

### Description of Symbols

100: Lens device
104: Electrochromic device
108: LED (light-emitting element)
109: PD (Photodetecting element)
114: CPU

## Claims

1. A lens device having an optical device whose light transmittance can be controlled electrically, comprising:
an optical device drive unit for controlling the light transmittance of the optical device by controlling a voltage applied to the optical device;
a light-emitting element for applying light to the optical device;
a photodetecting element for receiving part, passing through the optical device, of the light applied from the light-emitting element; and
a control unit for performing calibration processing of setting, as a reference transmittance which is a reference value for a light transmittance that can be specified externally, an output value of the photodetecting element that is obtained when the photodetecting element receives part, passing through the optical device, of light that is applied to the optical device from the light-emitting element in a state that at least part of the optical device is shielded from light and the light transmittance of the optical device is maximized by the optical device drive unit,
wherein in response to an instruction that specifies a multiplication factor by which to multiply the reference transmittance, the optical device drive unit controls the voltage supplied to the optical device so that the output value of the photodetecting element becomes equal to a value obtained by multiplying the reference transmittance by the multiplication factor.

2. The lens device according to claim 1, wherein the control unit performs the calibration processing at least once after power-on of the lens device.

3. The lens device according to claim 2, wherein the control unit performs the calibration processing immediately after the power-on of the lens device.

4. The lens device according to claim 3, wherein the control unit prohibits the calibration processing while an image taken by a camera device to which the lens device is attached is being recorded.

5. The lens device according to claim 3 or 4, wherein the control unit performs the calibration processing again if a time from reception of the instruction that specifies the multiplication factor by which to multiply the reference transmittance to reception of a next such instruction has exceeded a threshold value.

6. The lens device according to claim 3 or 4, wherein the control unit performs the calibration processing again if the instruction is an instruction specifying that the multiplication factor is equal to 1.

7. The lens device according to any one of claim 1 to 6, further comprising a light shield member for shielding part of the optical device from light,
wherein the light-emitting element and the photodetecting element are disposed in a space that is shielded from light by the light shield member.

8. The lens device according to claim 7, wherein the optical device is a plate-like device disposed perpendicularly to an optical axis of the lens device, and is formed with an opaque region which does not transmit light as a boundary portion between a portion that is shielded from light by the light shield member and a portion that is not shielded from light by the light shield member.

9. The lens device according to any one of claims 1 to 6, further comprising an iris which is disposed on the subject side of the optical device, wherein:
the light-emitting element and the photodetecting element are disposed closer to the optical device than the iris; and
in the calibration processing, the control unit sets a reference transmittance by causing the light-emitting element to apply light to the optical device in a state that the iris is closed completely and the light transmittance of the optical device is maximized.

10. The lens device according to any one of claim 1 to 9, wherein:
in the calibration processing, the control unit sets a reference transmittance by causing the light-emitting element to apply light to the optical device in a state that at least part of the optical device is shielded from light and the light transmittance of the optical device is maximized; and
a light emission amount of the light-emitting element is restricted so that an output of the photodetecting device that is produced when the photodetecting device receives light that passes through the optical device being illuminated with light by the light-emitting element in a state that the light transmittance of the optical device is maximized is not saturated.

11. A control method of a lens device having an optical device whose light transmittance can be controlled electrically, comprising:
a calibration step of setting, as a reference transmittance which is a reference value for a light transmittance that can be specified externally, an output value of a photodetecting element that is obtained when the photodetecting element receives part, passing through the optical device, of light that is applied to the optical device from a light-emitting element in a state that at least part of the optical device is shielded from light and the optical device is driven so that its light transmittance is maximized; and
a step, responsive to an instruction that specifies a multiplication factor by which to multiply the reference transmittance, of controlling a voltage supplied to the optical device so that the output value of the photodetecting element becomes equal to a value obtained by multiplying the reference transmittance by the multiplication factor.

12. The control method of a lens device according to claim 11, wherein the calibration step is executed at least once after power-on of the lens device.

13. The control method of a lens device according to claim 12, wherein the calibration step is executed immediately after the power-on of the lens device.

14. The control method of a lens device according to claim 13, wherein execution of the calibration step is prohibited while an image taken by a camera device to which the lens device is attached is being recorded.

15. The control method of a lens device according to claim 13 or 14, wherein the calibration step is executed again if a time from reception of the instruction that specifies the multiplication factor by which to multiply the reference transmittance to reception of a next such instruction has exceeded a threshold value.

16. The control method of a lens device according to claim 13 or 14, wherein the calibration step is executed again if the instruction is an instruction specifying that the multiplication factor is equal to 1.

17. The control method of a lens device according to any one of claim 11 to 16, wherein the calibration step sets a reference transmittance by causing the light-emitting element to apply light to the optical device in a state that the iris is closed completely and the light transmittance of the optical device is maximized.

18. The control method of a lens device according to any one of claims 11 to 17, wherein:
the calibration step sets a reference transmittance by causing the light-emitting element to apply light to the optical device in a state that at least part of the optical device is shielded from light and the light transmittance of the optical device is maximized; and
a light emission amount of the light-emitting element is restricted so that an output of the photodetecting device that is produced when the photodetecting device receives light that passes through the optical device being illuminated with light by the light-emitting element in a state that the light transmittance of the optical device is maximized is not saturated.
